# DEMANDE DE BREVET EUROPEEN

(11) **EP 4 813 750 A1**
(43) Date de publication de la demande: **30.09.2026**
(21) Numéro de dépôt: 26168398.1
(22) Date de dépôt: 27.03.2026
(51) Int. Cl.: B60R 3/00, B60R 3/02

(54) **VÉHICULE AUTOMOBILE COMPRENANT UNE PORTE BATTANTE ARRIÈRE ET UNE ÉCHELLE EXTÉRIEURE**

(30) Priorité: 28.03.2025 FR 2503248
(71) Demandeur: Flexis, 92100 Boulogne Billancourt (FR)
(72) Inventeur: CHAUMEIL, Romain, 78640 Villiers-Saint-Frédéric (FR); ANGLADE, Cédric, 78640 Villiers-Saint-Frédéric (FR); MOGNER, Regis, 78640 Villiers-Saint-Frédéric (FR)
(74) Mandataire: Lavoix

(57) **Abrégé**

La présente invention concerne un véhicule automobile (2) comprenant une porte battante arrière (4), un toit (6), une galerie (8) et une échelle (10) comportant deux montants (12). L'échelle (10) comporte une partie coulissante (14) comprenant deux éléments longitudinaux (140), des barreaux (142) et deux portions supérieures (144). La partie coulissante (14) coulisse le long des deux montants (12) et des éléments élastiquement déformables (148) sont intercalés entre les montants (12) et les éléments longitudinaux (140). Les portions supérieures (144) comportent des pions (150) et la galerie (8) comporte des encoches (160) alignées avec les pions (150). La partie coulissante (14) coulisse vers le bas et se verrouille au niveau de la galerie (8) par l'insertion des pions (150) dans les encoches (160), sous l'effet du poids d'un utilisateur. L'élément élastiquement déformable (148) renvoie par défaut la partie coulissante (14) vers une position de repos, par coulissement vers le haut.

## Description

La présente invention concerne un véhicule automobile comprenant, entre autres, une porte battante arrière ainsi qu'une échelle disposée sur l'extérieur du véhicule au niveau de la porte battante arrière.

Le domaine technique de l'invention est celui des véhicules automobiles équipés d'une échelle extérieure.

Dans ce domaine, il est connu de US12 024949B2 et de US12145537B2 de fixer l'échelle directement sur la porte battante arrière du véhicule, notamment pour ne pas empêcher l'ouverture de la porte battante arrière. Lorsqu'un utilisateur prend appui sur une échelle fixée sur la porte battante arrière, des efforts importants sont appliqués sur la porte et notamment sur la partie supérieure de celle-ci, parfois dénommée « serti de porte ». La partie supérieure de la porte est légère et peu résistante mécaniquement. Ainsi, au fur et à mesure de l'utilisation de l'échelle, la partie supérieure de la porte tend à se déformer et à se dégrader.

D'autre part, il est connu de US11981289B2 et de US2022/0136326A1 de disposer l'échelle sur un côté d'un véhicule. Dans ce cas, l'échelle augmente l'encombrement latéral du véhicule, sauf si elle est rabattue sur le toit, ce qui nécessite des manœuvres récurrentes et pénibles.

Il est également connu de JPH0732943A une échelle montée sur une porte arrière de véhicule.

C'est à ces inconvénients qu'entend plus particulièrement remédier l'invention en proposant un véhicule automobile dans lequel l'échelle est efficacement disposée au niveau de la porte battante arrière sans risque de détérioration de la partie supérieure de cette porte.

A cet effet, l'invention a pour objet un véhicule automobile comprenant une porte battante arrière ; un toit ; une galerie montée sur le toit et une échelle comportant deux montants, parallèles entre eux et fixés sur la porte battante arrière.

Conformément à l'invention, l'échelle comporte également une partie coulissante comprenant : deux éléments longitudinaux parallèles entre eux, des barreaux reliant entre eux les éléments longitudinaux et deux portions supérieures s'étendant, à partir du haut des éléments longitudinaux, au-dessus d'une partie de la galerie ; la partie coulissante coulisse le long des deux montants, selon une première direction d'un axe longitudinal d'un des montants, entre une première position de repos, correspondant au cas où aucun effort n'est exercé par un utilisateur sur les barreaux, et une deuxième position activée, correspondant au cas où un utilisateur est en appui sur au moins un des barreaux ; au moins un élément élastiquement déformable est intercalé, selon l'axe, entre un montant et un élément longitudinal ; au moins une des portions supérieures comporte au moins un pion orienté vers le bas, en direction de la galerie ; la galerie comporte au moins une encoche alignée avec le pion selon une direction parallèle à la direction de coulissement ; lorsque l'échelle est dans sa première position de repos, les deux portions supérieures de la partie coulissante sont décalées de la galerie, selon une direction parallèle à l'axe longitudinal, par un jeu ; la partie coulissante est configurée pour coulisser verticalement de sa première position vers sa deuxième position et se verrouiller au niveau de la galerie, dans sa deuxième position, par l'insertion du pion dans l'encoche, sous l'effet du poids d'un utilisateur en appui sur un ou plusieurs des barreaux ; et l'élément élastiquement déformable renvoie par défaut la partie coulissante vers sa première position, par coulissement selon une deuxième direction de l'axe longitudinal, opposée à sa première direction.

Grâce à l'invention, les éléments élastiques permettent à l'échelle de coulisser verticalement. Lorsqu'un utilisateur prend appui sur l'échelle, les éléments élastiques se compriment, les deux portions supérieures de l'échelle prennent alors appui sur la galerie et les pions s'insérent dans les encoches. Ainsi, la galerie récupère une partie des efforts normalement appliqués à la partie supérieure de la porte battante arrière. Cette dernière se déforme donc moins au fur et à mesure des utilisations de l'échelle.

Lorsque l'échelle est au repos, c'est-à-dire lorsqu'aucun utilisateur ne prend appui sur l'échelle, les éléments élastiques sont dans leur position d'équilibre, les deux portions supérieures de l'échelle sont maintenues au-dessus de la galerie et les pions ne sont pas insérés dans les encoches. Ainsi, il est possible d'ouvrir ou fermer le battant secondaire de la porte battante arrière.

Selon des aspects avantageux mais non obligatoires de l'invention, un véhicule automobile peut incorporer une ou plusieurs des caractéristiques suivantes, prises dans toute combinaison techniquement admissible :
- Chaque élément longitudinal est tubulaire et chaque élément élastiquement déformable est monté à l'intérieur d'un élément longitudinal tubulaire, entre une extrémité supérieure d'un montant et une butée ménagée à l'intérieur de l'élément tubulaire.
- Chaque élément élastique est un ressort, notamment un ressort hélicoïdal.
- Chaque élément élastique est un bloc en élastomère.
- Chaque élément élastique est un vérin, hydraulique ou à gaz.
- Chaque élément élastique est un empilement de rondelles Belleville.
- Les pions sont en nombre supérieur ou égal à deux et chaque portion supérieure de La partie coulissante comporte au moins un pion, les portions supérieures comportant, de préférence, le même nombre de pions.
- Les deux portions supérieures de la partie coulissante sont parallèles entre elles et les pions sont parallèles ou quasi-parallèles à l'axe longitudinal.
- L'échelle est montée sur un battant secondaire de la porte et verrouille ce battant secondaire en position fermée lorsque la partie coulissante est dans sa deuxième position.
- La galerie comporte des barres transversales et les encoches sont disposées sur la barre transversale la plus proche de l'arrière du véhicule.

L'invention sera mieux comprise à la lecture de la description qui va suivre d'un mode de réalisation d'un véhicule automobile conforme à son principe, donnée uniquement à titre d'exemple et faite en référence aux dessins annexés dans lesquels :
[Fig. 1] la figure 1 est une vue en perspective arrière par le dessus d'un véhicule automobile conforme à l'invention.
[Fig. 2] la figure 2 inclut deux coupes longitudinales de principe du véhicule, dans le plan Il de la figure 1, lorsque l'échelle est au repos sur l'insert A) et lorsqu'un utilisateur prend appui sur l'échelle sur l'insert B).

Le véhicule 2 représenté sur les figures comprend, entre autres, une porte battante arrière 4, un toit 6, une galerie 8 et une échelle 10.

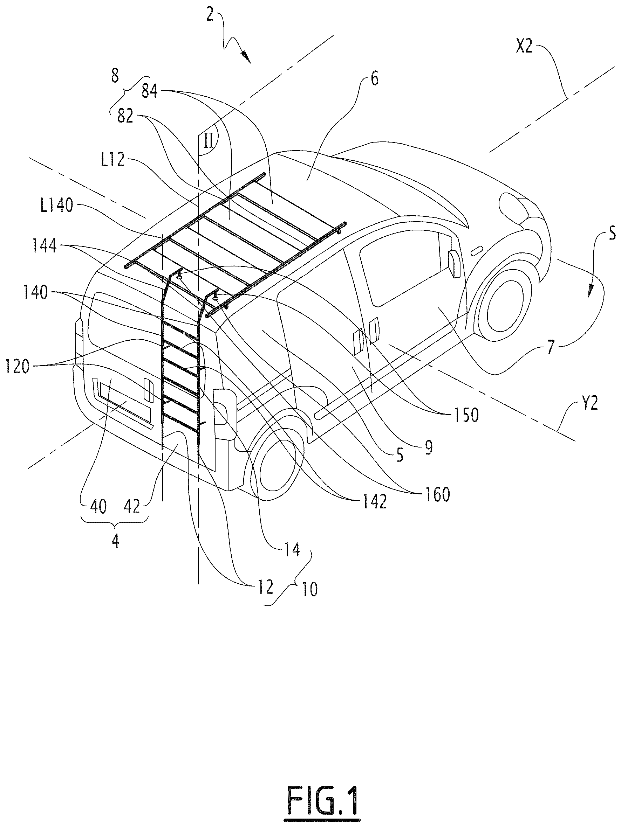

Le véhicule 2 comprend également une caisse 5, à laquelle appartient le toit 6, ainsi que des portes avant, dont une seule est visible à la figure 1 avec la référence 7, et une porte latérale 9.

On considère une position nominale du véhicule 2, dans laquelle celui-ci repose sur une surface du sol S plane et horizontale. C'est dans cette position que sont définies des directions horizontale et verticales pour le véhicule 2.

La porte battante arrière 4 est composée d'un battant principal 40 comportant une poignée et d'un battant secondaire 42 ne comportant pas de poignée. Ces battant sont articulés sur la caisse 5 autour d'axes verticaux et parallèles entre eux. Typiquement, lors d'une manœuvre de la porte battante arrière 4, la battant principal 40 est ouvert en premier, pour permettre l'ouverture du battant secondaire 42, et fermé en dernier, pour permettre la fermeture du battant secondaire 42.

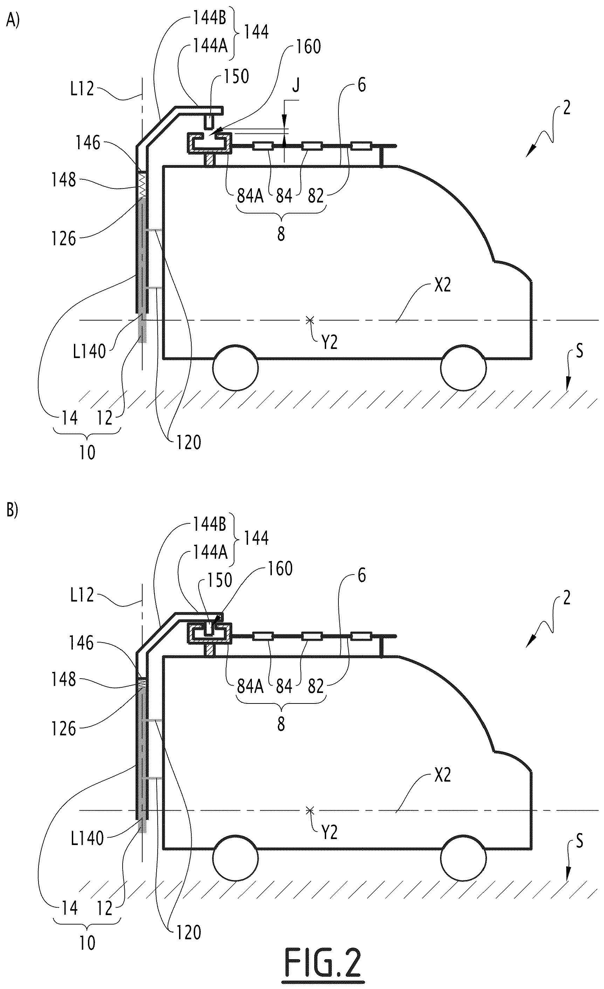

La galerie 8 est disposée à l'extérieur du véhicule 2 à l'horizontale sur le toit 6 et comporte des barres longitudinales 82, parallèles à un axe longitudinal avant-arrière X2 du véhicule, et des barres transversales 84, parallèles à un axe transversal Y2 du véhicule et perpendiculaires aux barres longitudinales 82. On note 84A la barre transversale arrière, située la plus en arrière, au sein de la galerie 8. Pour la clarté du dessin, la barre transversale arrière 84A est agrandie, par rapport aux autres barres transversales 84, sur les figures 2 et 3.

L'échelle 10 est disposée à l'extérieur du véhicule 2 à la verticale, au niveau du battant secondaire 42 de la porte battante arrière 4.

L'échelle 10 comporte deux montants verticaux 12, parallèles entre eux et fixés sur le battant secondaire 42 de la porte battante arrière 4. Typiquement, les deux montants 12 comportent des pattes 120 horizontales disposées du côté des deux montants faisant face au battant secondaire 42 de la porte battante arrière 4.

De préférence, les pattes 120 sont immobilisées sur le battant secondaire 42 par des moyens mécaniques irréversibles, tels que des points de soudure. Ainsi, les deux montants 12 et le battant secondaire 42 de la porte battante arrière 4 forment un sous-ensemble rigide et indémontable.

Dans l'exemple des figures, les montants 12 comportent au total quatre pattes 120. Cependant, ce nombre n'est pas limitatif, le nombre de pattes 120 de chaque montant 12 pouvant varier selon les besoins.

On note L12 un axe longitudinal de l'un des montants 12. Les axes L12 des deux montants sont parallèles.

Dans l'exemple des figures, les axes longitudinaux L12 sont verticaux et parallèles aux axes d'articulation des battants 40 et 42 sur la caisse 5. En variante, chaque axe L12 peut être quasi vertical et décalé angulairement par rapport à la verticale, d'un angle inférieur à 10°.

L'échelle 10 comporte également une partie coulissante 14. La partie coulissante 14 comprend deux éléments longitudinaux 140, dans l'exemple verticaux en configuration nominale d'utilisation du véhicule. La partie coulissante 14 comprend également des barreaux 142, perpendiculaires aux éléments longitudinaux 140, horizontaux en configuration nominale d'utilisation du véhicule et qui relient entre eux les éléments longitudinaux 140. Les barreaux 142 peuvent également être dénommés échelons ou marches. La partie coulissante 14 comprend en outre deux portions supérieures 144.

Avantageusement, et comme représenté sur les figures, les éléments longitudinaux 140 sont tubulaires. Les barreaux 142 sont disposés entre les deux éléments longitudinaux 140 qu'ils relient entre eux.

Les deux éléments longitudinaux 140 sont parallèles entre eux et configurés pour envelopper les deux montants 12. Chacun des deux éléments longitudinaux 140 comportent une butée 146 disposée dans son volume intérieur.

On note L140 un axe longitudinal de l'un des éléments longitudinaux 140. Les axes L140 des deux éléments longitudinaux sont parallèles.

Les axes L12 et L140 sont parallèles. Les axes L140 sont donc verticaux ou quasi-verticaux. En particulier, l'axe L12 d'un montant 12 et l'axe L140 de l'élément longitudinal 140 qui enveloppe ce montant sont confondus.

De préférence, les deux butées 146 sont situées à la même hauteur, le long des deux axes longitudinaux L140.

Lorsque les deux éléments longitudinaux tubulaires 140 enveloppent les deux montants 12, les éléments de butée 146 bloquent un déplacement en translation des deux éléments longitudinaux 140 selon l'axe L12, en direction du sol, c'est-à-dire selon une première direction de l'axe L12.

Des éléments élastiquement déformables 148 sont montés à l'intérieur des deux éléments longitudinaux tubulaires 140, en dessous des butées 146.

De préférence, les éléments élastiquement déformables 148 sont fixés sous les éléments de butée 146 selon l'axe L140.

Lorsque les éléments longitudinaux 140 enveloppent les montants 12, les éléments élastiquement déformables 148 sont intercalés entre des extrémités supérieures 126 des deux montants 12.

Ainsi, les éléments élastiquement déformables 148 viennent au contact des montants 12, plus particulièrement de leurs extrémités supérieures 126.

Comme les éléments longitudinaux tubulaires 140 enveloppent les montants 12 et les éléments élastiquement déformables 148, les pièces 12 et 148 sont protégés des intempéries et ne sont pas accessibles à un utilisateur utilisant l'échelle 10, qui ne risque pas de se blesser à leur contact. Ainsi la durée de vie et la sécurité de fonctionnement de l'échelle 10 sont améliorées. L'élasticité des éléments élastiquement déformables 148 est choisie, en fonction de la masse de la partie coulissante 14, pour renvoyer automatiquement cette partie coulissante vers une première position représentée au figures 1 et 2, dans laquelle les portions supérieures 144 sont disposées à distance de la galerie 8, sans contact avec elle. Lorsque l'échelle 10 est au repos, dans le cas où aucun effort n'est exercé par un utilisateur sur les barreaux 142, les éléments élastiquement déformables 148 assurent le maintien de la partie coulissante 14 de l'échelle 10 dans la première position.

Lors de l'utilisation de l'échelle 10, notamment lorsqu'un utilisateur prend appui dessus, les éléments élastiques 148 permettent un coulissement d'amplitude limité de la partie coulissante 14 selon l'axe L12, en direction du sol, c'est-à-dire selon la première direction de l'axe L12, et un amortissement du mouvement de de la partie coulissante 14 pour ne pas endommager la partie coulissante 14 ni les deux montants 12.

Typiquement, lorsqu'un utilisateur prend appui sur l'échelle 10, en montant sur l'un des barreaux 142, le poids cumulé de cet utilisateur et de la partie coulissante vainc l'effort élastique délivré par les éléments élastiquement déformables 148 et l'ensemble formé de cet utilisateur et de la partie coulissante coulisse le long des montants 12, vers le bas. En pratique, la course du coulissement de la partie coulissante 14 selon l'axe L12 en direction du sol est de l'ordre de quelques millimètres.

Le seuil de déclenchement du déplacement de la partie coulissante 14 selon l'axe L12 en direction du sol dépend de la constante de raideur des éléments élastiquement déformables 148. Cette constante de raideur est choisie en fonction du seuil de déclenchement désiré, par exemple la masse de la partie coulissante 14 plus 25 kg.

Lorsque l'échelle 10 passe d'un état utilisé à un état de repos, c'est-à-dire lorsqu'un utilisateur quitte les barreaux 142, les éléments élastiquement déformables 148 assurent le retour de l'échelle 10 dans sa première position par un coulissement selon l'axe L12, vers le haut, en direction du ciel, c'est-à-dire selon une deuxième direction de l'axe L12, opposée à sa première direction.

Par exemple, les éléments élastiquement déformables 148 sont des ressorts, comme représenté sur les figures 2 et 3. En variante, ces éléments sont des blocs en élastomère, des vérins hydrauliques ou pneumatiques ou des empilements de rondelles Belleville. Tout autre élément ayant un comportement élastique, permettant le coulissement vertical de la partie coulissante 14 de l'échelle 10 lors de son utilisation, vers le bas et vers le haut, est envisageable ici.

Les deux portions supérieures 144 sont des extensions des deux éléments longitudinaux 140 en haut de ces-dernières. De préférence, les deux portions supérieures 144 sont fabriquées dans le même matériau que les deux éléments longitudinaux 140 et monoblocs avec ceux-ci.

De préférence, les deux portions supérieures 144 sont parallèles ou quasi-parallèles entre elles. Par quasi-parallèles, on entend qu'elles forment entre elles un angle inférieur à 10°, en vue de dessus.

Au moins une partie distale 144A de chaque portion supérieure 144 est disposée au-dessus d'au moins une partie de la galerie 8, en étant parallèle à la galerie 8. Les parties distales sont horizontales ou quasi-horizontales.

De préférence, les parties distales 144A des portions supérieures 144 disposées au-dessus de la galerie 8 sont légèrement décalées verticalement de la galerie 8 par un jeu J, lorsque l'échelle 10 est au repos, c'est-à-dire lorsque la partie coulissante 14 est dans sa première position.

Lors de l'utilisation de l'échelle 10, notamment lorsqu'un utilisateur prend appui sur les barreaux 142, le jeu J est annulé par le coulissement de la partie coulissante 14, de sa première position vers sa deuxième position, et au moins une partie distale 144A de chaque portion supérieure 144 s'appuie verticalement sur la galerie 8. Ainsi, une partie des efforts, notamment du poids, exercés lors de l'utilisation de l'échelle 10 est appliquée sur la galerie 8. Ceci donne une meilleure répartition des efforts limitant, notamment, une dégradation de la partie supérieure de la porte battante arrière 4.

Dans l'exemple des figures, chaque portion supérieure 144 comporte une partie oblique 144B, ménagée dans la continuité de chaque élément longitudinal 140, et la partie distale 144A. La partie oblique 144B relie la partie distale 144A à l'élément longitudinal tubulaire 140 adjacent.

Toutefois, toute forme des portions supérieures 144, permettant aux deux portions supérieures 144 d'avoir au moins une partie distale au-dessus d'une partie de la galerie 8 et leur permettant de ne pas entrer en contact avec des éléments du véhicule 2 autre que la galerie 8, lorsque de l'utilisation de l'échelle 10 ou lorsqu'elle est au repos, est envisageable ici.

Les deux portions supérieures 144, comportent sur leur partie distale 144A, des pions 150 orientés vers le sol, en direction de la galerie 8.

Avantageusement, les pions 150 sont en nombre supérieur ou égal à deux et chaque portion supérieure 144 de la partie coulissante 14 comporte au moins un pion 150. De préférence chaque portion supérieure 144 comporte le même nombre de pions 150.

De préférence, les pions 150 sont tous parallèles ou quasi-parallèles à l'axe L12 des montants 12. Par quasi parallèle, on entend que le décalage angulaire entre un pion 150 et l'axe L12 est inférieur à 10°.

La galerie 8 comporte des encoches 160. La galerie comporte au moins autant d'encoches 160 qu'il n'y a de pions 150 sur les portions supérieures 144 de la partie coulissante 14 de l'échelle 10. Une encoche 160 est disposée sur la galerie 8 en regard de chaque pion 150.

Dans l'exemple des figures, la galerie 8 comporte deux encoches 160 disposées sur la barre transversale arrière 84A.

Lorsque la partie coulissante 14 coulisse jusqu'à sa deuxième position, notamment lorsqu'un utilisateur prend appui sur les barreaux 142, l'échelle 10 se verrouille au niveau de la galerie 8 par l'insertion des pions 150 dans les encoches 160.

Lorsque l'échelle 10 est au repos, les pions 150 sont disposés au-dessus des encoches 160 et les pions 150 ne sont pas engagés dans les encoches 160. Le jeu J est alors défini entre les pions 150 et la surface supérieure de la barre transversale 84A dans laquelle sont ménagées les encoches 160. Ainsi, au repos, l'échelle 10 ne s'oppose pas à l'ouverture du battant secondaire 42 de la porte battante arrière 4.

Lors de l'utilisation de l'échelle 10, la partie coulissante 14 coulisse selon l'axe L12 en direction du sol et les pions 150 s'insèrent dans les encoches 160 jusqu'au contact vertical des portions supérieures 144 avec la galerie 8. Ainsi, lors de l'utilisation de l'échelle 10, cette-dernière empêche l'ouverture du battant secondaire 42 de la porte battante arrière 4. Le risque d'une ouverture malencontreuse du battant secondaire 42 sur lequel est disposée l'échelle 10, lorsqu'un utilisateur a pris appui dessus, est donc éliminé. L'utilisation de l'échelle 10 est de ce fait rendue plus sûre.

Lorsque les pions 150 sont engagés dans les encoches 160, ces encoches 160 bloquent un déplacement en translation de l'échelle 10 parallèlement à la galerie 8, selon les deux axes X2 et Y2 du véhicule 2, ceci dans les deux directions de chacun de ces deux axes. En d'autres termes, les encoches 160 forment des butées de blocage en translation de l'échelle 10 par rapport à la galerie 8, selon les axes X2 et Y2 dans les deux directions de chaque axe.

Le contact vertical entre les portions supérieures 144 de la partie coulissante 14 de l'échelle 10 et la galerie 8 permet un blocage en translation de l'échelle 10 selon l'axe L12, vertical ou quasi-vertical, dans la direction orientée vers le sol. Ainsi, lors de l'utilisation de l'échelle 10, cette-dernière est verrouillée verticalement et dans un plan horizontal. L'échelle 10 est donc stabilisée lorsqu'un utilisateur prend appui dessus.

Selon une variante non-représentée de l'invention, les encoches 160 sont des trous traversant une barre de la galerie 8 de part en part.

Selon une variante non-représentée de l'invention, les portions supérieures 144 comportent plusieurs pions 150. Selon une autre variante non-représentée de l'invention, un ou des pions 150 est ou sont prévu(s) sur une seule des deux portions supérieures 144. De façon générale, le nombre et la répartition des encoches 160 sont prévus en fonction du nombre et de la répartition des pions 150. En particulier, le nombre d'encoches 160 est avantageusement égal au nombre de pions 150.

Selon une variante non-représentée de l'invention, l'échelle est montée sur le battant principal 40 de la porte battante arrière 4. Selon une autre variante non-représentée de l'invention, la porte battante arrière 4 est à un seul battant. Dans tous les cas, l'échelle ne doit pas masquer la plaque d'immatriculation.

Selon une variante non représentée de l'invention, un élément élastiquement déformable 148, par exemple un ressort, est monté à l'intérieur d'un seul des éléments longitudinaux 140.

Selon une autre variante non représentée de l'invention, plusieurs éléments élastiquement déformable 148, par exemple des ressorts, sont montés à l'intérieur d'un élément longitudinal 140 ou des deux éléments longitudinaux 140.

Selon une variante non-représentée de l'invention, les éléments longitudinaux 140 ne sont pas tubulaires. Dans ce cas, les montants 12 et le ou les éléments élastiquement déformables 148 sont montés à l'extérieur des éléments longitudinaux 140, ce qui est moins ergonomique que l'exemple des figures, car les pièces 12 et 148 sont visibles et exposées aux intempéries.

Toute caractéristique décrite ci-dessus pour un mode de réalisation ou une variante est applicable aux autres modes de réalisation et variantes, pour autant que cela est techniquement possible.

## Revendications

1. Véhicule automobile (2) comprenant :
- une porte battante arrière (4) ;
- un toit (6) ;
- une galerie (8) montée sur le toit (6) ;
- une échelle (10) comportant deux montants (12), parallèles entre eux et fixés sur la porte battante arrière (4) ;
**caractérisé en ce que** :
- l'échelle (10) comporte également une partie coulissante (14) comprenant :
∘ deux éléments longitudinaux (140) parallèles entre eux,
∘ des barreaux (142) reliant entre eux les éléments longitudinaux (140) et
∘ deux portions supérieures (144) s'étendant, à partir du haut des éléments longitudinaux, au-dessus d'une partie de la galerie (8) ;
- la partie coulissante (14) coulisse le long des deux montants (12), selon une première direction d'un axe longitudinal (L12) d'un des montants, entre une première position de repos, correspondant au cas où aucun effort n'est exercé par un utilisateur sur les barreaux (142), et une deuxième position activée, correspondant au cas où un utilisateur est en appui sur au moins un des barreaux ;
- au moins un élément élastiquement déformable (148) est intercalé, selon l'axe (L12), entre un montant (12) et un élément longitudinal (140);
- au moins une des portions supérieures (144) comporte au moins un pion (150) orienté vers le bas, en direction de la galerie (8) ;
- la galerie (8) comporte au moins une encoche (160) alignée avec le pion (150) selon une direction parallèle à la direction de coulissement ;
- lorsque l'échelle (10) est dans sa première position de repos, les deux portions supérieures (144) de la partie coulissante (14) sont décalées de la galerie (8), selon une direction parallèle à l'axe longitudinal (L12), par un jeu (J) ;
- la partie coulissante (14) est configurée pour coulisser verticalement de sa première position vers sa deuxième position et se verrouiller au niveau de la galerie (8), dans sa deuxième position, par l'insertion du pion (150) dans l'encoche (160), sous l'effet du poids d'un utilisateur en appui sur un ou plusieurs des barreaux (142) ; et
- l'élément élastiquement déformable (148) renvoie par défaut la partie coulissante (14) vers sa première position, par coulissement selon une deuxième direction de l'axe longitudinal (L12), opposée à sa première direction.

2. Véhicule selon la revendication 1, dans lequel chaque élément longitudinal (140) est tubulaire et chaque élément élastiquement déformable (148) est monté à l'intérieur d'un élément longitudinal tubulaire, entre une extrémité supérieure (126) d'un montant (12) et une butée (146) ménagée à l'intérieur de l'élément tubulaire (140).

3. Véhicule selon l'une des revendications 1 ou 2, dans lequel chaque élément élastique (148) est un ressort, notamment un ressort hélicoïdal.

4. Véhicule selon l'une des revendications 1 ou 2, dans lequel chaque élément élastique (148) est un bloc en élastomère.

5. Véhicule selon la revendication 2, dans lequel chaque élément élastique (148) est un vérin, hydraulique ou à gaz.

6. Véhicule selon la revendication 2, dans lequel chaque élément élastique (148) est un empilement de rondelles Belleville.

7. Véhicule selon l'une des revendications précédentes, dans lequel les pions (150) sont en nombre supérieur ou égal à deux et chaque portion supérieure (144) de la partie coulissante (14) comporte au moins un pion, les portions supérieures comportant, de préférence, le même nombre de pions.

8. Véhicule selon l'une des revendications précédentes, dans lequel les deux portions supérieures (144) de la partie coulissante (14) sont parallèles entre elles et les pions (150) sont parallèles ou quasi-parallèles à l'axe longitudinal (L12).

9. Véhicule selon l'une des revendications précédentes, dans lequel l'échelle (10) est montée sur un battant secondaire (42) de la porte et verrouille ce battant secondaire (42) en position fermée lorsque la partie coulissante (14) est dans sa deuxième position.

10. Véhicule selon l'une des revendications précédentes, dans lequel la galerie (8) comporte des barres transversales (84) et les encoches (160) sont disposées sur la barre transversale (84A) la plus proche de l'arrière du véhicule (2).
